# EUROPÄISCHE PATENTSCHRIFT

(11) **EP 1 193 126 B1**
(45) Veröffentlichungstag und Bekanntmachung des Hinweises auf die Patenterteilung: **22.12.2004**
(21) Anmeldenummer: 01121959.9
(22) Anmeldetag: 12.09.2001
(51) Int. Cl.: B60Q 1/26

(54) **Leuchte für Fahrzeuge**
Vehicle lights
Feux pour véhicules

(30) Priorität: 14.09.2000 DE 10045828
(43) Veröffentlichungstag der Anmeldung: 03.04.2002
(73) Patentinhaber: Hella KGaA Hueck & Co., 59552 Lippstadt (DE); DaimlerChrysler AG, 70546 Stuttgart (DE)
(72) Erfinder: Hamelbeck, Antonius, 59609 Anröchte (DE); Bressel, Frank, Dipl.-Ing., 14961 Ludwigsfelde (DE)
(74) Vertreter: Ostermann, Thomas, Dipl.-Ing.

(56) Entgegenhaltungen:
- EP-A- 0 879 735
- EP-A- 0 960 773
- DE-A- 2 250 537
- FR-A- 2 746 728
- US-A- 5 269 640
- PATENT ABSTRACTS OF JAPAN vol. 2000, no. 05, 14. September 2000 (2000-09-14) & JP 2000 052852 A (MITSUBISHI MOTORS CORP), 22. Februar 2000 (2000-02-22)
- PATENT ABSTRACTS OF JAPAN vol. 2000, no. 06, 22. September 2000 (2000-09-22) & JP 2000 071863 A (MITSUBISHI MOTORS CORP), 7. März 2000 (2000-03-07)

## Beschreibung

Die Erfindung betrifft eine Leuchte, insbesondere Heckleuchte für Kraftfahrzeuge, mit einem an einer Karosserie zu befestigenden Halterungsteil, das mit mindestens einer Lasche auf ein an der Karosserie angeordnetes Befestigungsteil aufsteckbar ist und dass mindestens ein Aufsetzteil aufweist, das mit der Karosserie verbindbar ist.

Für moderne Leuchten, insbesondere Heckleuchten, ist es erwünscht, diese einfach und positionsgenau an der Karosserie befestigen zu können. So ist aus der gattungsgemäßen DE 197 21 596 A1 eine Leuchte bekannt, die ein Halteteil aufweist, das über Laschen und über Rastteile an der Karosserie befestigbar ist. Die Rastteile sind dabei als Rastdorne ausgebildet, die mit entsprechenden an der Karosserie angeordneten Rastöffnungen verrasten. Die Einhängedorne sind an der Rückseite des als Blende ausgebildeten Halterungsteiles vorgesehen, so dass sie in der Einbaulage nicht sichtbar sind. Die Laschen weisen Öffnungen auf, durch die an der Karosserie angeordnete Schraubelemente ragen, mit denen das Halterungsteil an der Karosserie festgeschraubt werden kann. Die Längsachsen der Schraubelemente und die Längsachsen der Rastöffnungen sind, wie die entsprechenden Laschen und Rastdorne, etwa rechtwinklig zueinander angeordnet.

Nachteilig dabei ist, dass zu einer passgenauen Positionierung entweder mit kostenintensiven engen Toleranzen gearbeitet werden muss oder dass die endgültige Positionierung erst bei dem Festschrauben erfolgt. Weiterhin nachteilig ist, dass die zur Demontage notwendige Entrastung der Einhängedorne, insbesondere bei Verwendung mehrerer Einhängdorne, relativ schwierig ist.

Aufgabe der vorliegenden Erfindung ist es daher, die bekannten Leuchten so zu verbessern, dass deren Montage und Demontage kostengünstig und einfach durchzuführen ist.

Diese Aufgabe wird erfindungsgemäß in Verbindung mit den Oberbegriff des Anspruches 1 dadurch gelöst, dass die Lasche ein Langloch aufweist und dass das Aufsetzteil eine in Ausdehnungsrichtung des Langloches durch eine seitliche Öffnung geöffnete Kugelschale aufweist, in der ein an der Karosserie angeordneter Kugelkopf eines Kugelbolzens hintergreifbar oder verrastbar angeordnet ist.

Durch die Anordnung eines Langloches und die seitliche Kugelschale ist es möglich, das Halterungsteil in einer Montageposition aufzustecken und durch geführtes Verschieben in seine vorgesehene Position zu bringen. Eine Verschraubung ist dann nur noch zur Sicherung notwendig. Die an der Karosserie anzuordnenden Kugelbolzen und Befestigungsteile können in etwa parallelen Ebenen angeordnet werden, so dass eine positionsgenaue Positionierung des Halterungsteiles relativ kostengünstig möglich ist. Neben der Montage wird zugleich die Demontage vereinfacht. Eine Demontage erfolgt lediglich in umgekehrter Reihenfolge, wobei das Entfernen der Aufsetzteile lediglich durch Verschieben des Halterungsteils erfolgt.

Gemäß einer bevorzugten Ausführungsform der Erfindung ist das Langloch der Lasche in vertikaler Richtung angeordnet und die Kugelschale in vertikaler Richtung nach unten geöffnet. In einer oberen Montagestellung der Halterung sind die Gewindebolzen in einem in vertikaler Richtung unteren Bereich der Langlöcher der Laschen angeordnet, und die Aufsetzteile mit den Kugelbolzen sind dabei nicht im Eingriff. In einer unteren Fixierstellung der Halterung sind die Gewindebolzen in einem in einer vertikalen Richtung oberen Bereich der Langlöcher angeordnet und die Aufsetzteile mit den Kugelbolzen in der Kugelschale verschieblich gelagert.

Durch die Anordnung der Langlöcher in vertikaler Richtung lässt sich das Halterungsteil in Schwerkraftrichtung in seine Fixierungsposition bringen und eine unerwünschte Depositionierung vor der endgültigen Fixierung durch Verschrauben zuverlässig vermeiden.

Nach einer weiteren bevorzugten Ausführungsform der Erfindung sind die Längsachsen von Befestigungsteil und Kugelbolzen etwa parallel zueinander in horizontaler Richtung angeordnet. Das Aufsetzteil weist eine Aufsetzteillängsachse auf, die etwa in Richtung der Längsachse des Kugelbolzen anordenbar ist. Durch die etwa parallele Anordnung der Längsachsen wird eine relativ einfache und sichere positionsgenaue Herstellung der Einzelteile ermöglicht. Die Längsachsen können aber auch in einem leichten Winkel zueinander angeordnet werden.

Gemäß einer weiteren bevorzugten Ausführungsform der Erfindung weist das Aufsetzteil an seinem dem Halterungsteil abgewandten freien Ende eine stirnseitige Öffnung auf, durch die im montierten Zustand der Kugelbolzen mit seinem Bolzenkörper hindurchgeführt ist. Die seitliche Öffnung des Aufsetzteiles erstreckt sich unter Verringerung und anschließender Erweiterung in radialer Richtung nach außen.

Durch die Erweiterung der seitlichen Öffnung des Aufsetzteiles nach außen wird die Einführung des Kugelbolzens bzw. des Kugelkopfes erleichtert. Die abragenden Enden des Aufsetzteils sind vorzugsweise nachgiebig ausgebildet. Zugleich können über den Bolzenkörper des Kugelbolzen Passungenauigkeiten durch eine gewisse Flexibilität des Bolzenkörpers ausgeglichen werden.

Nach einer weiteren bevorzugten Ausführungsform der Erfindung weist das Halterungsteil drei Laschen und die Karosserie drei mit den Laschen korrespondierende Befestigungsteile auf. Das Halterungsteil weist zugleich drei Aufsetzteile und die Karosserie drei mit den Kugelschalen der Aufsetzteile korrespondierende Kugelbolzen auf.

Insbesondere bei einem langgestreckten Halterungsteil kann so eine optimale Befestigung erzielt werden. Für kürzere Halteteile können zwei Aufsetzteile und zwei Laschen ausreichend sein.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

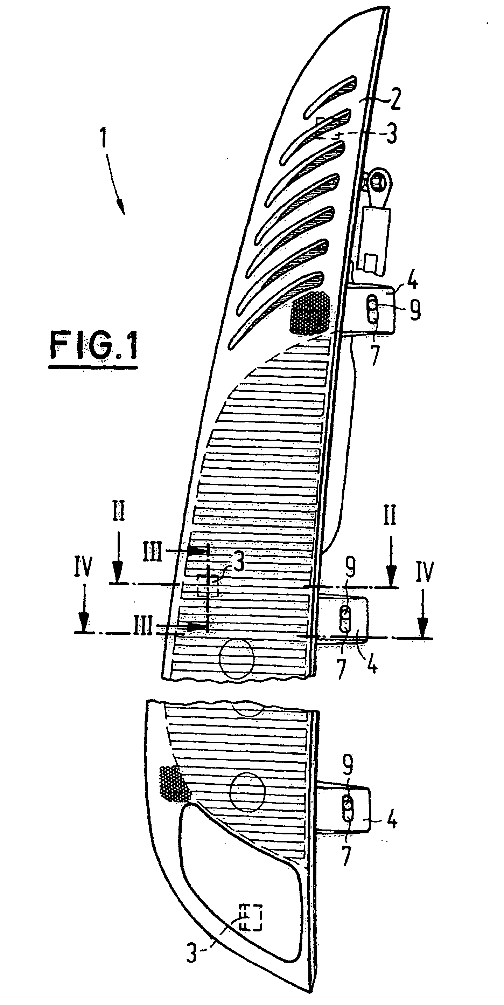

- Figur 1:: Eine Vorderansicht einer Heckleuchte in verkleinerter Darstellung,

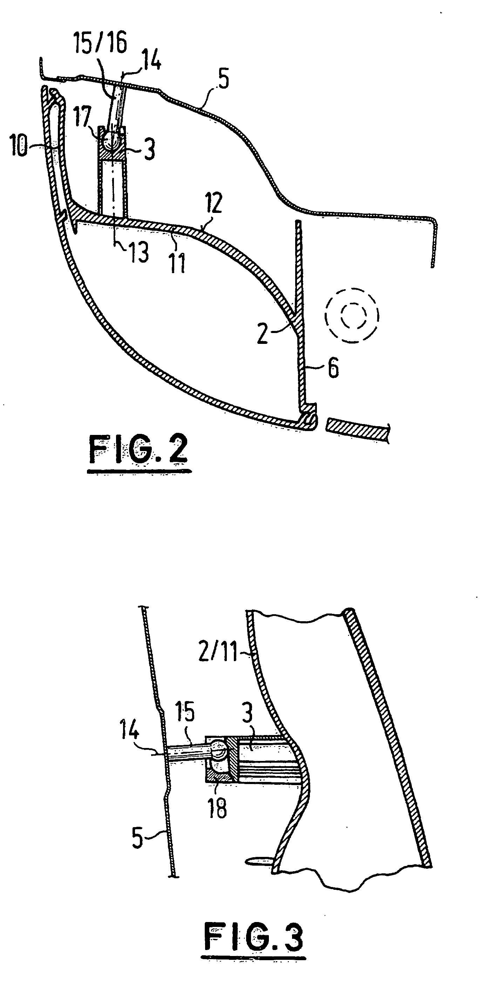

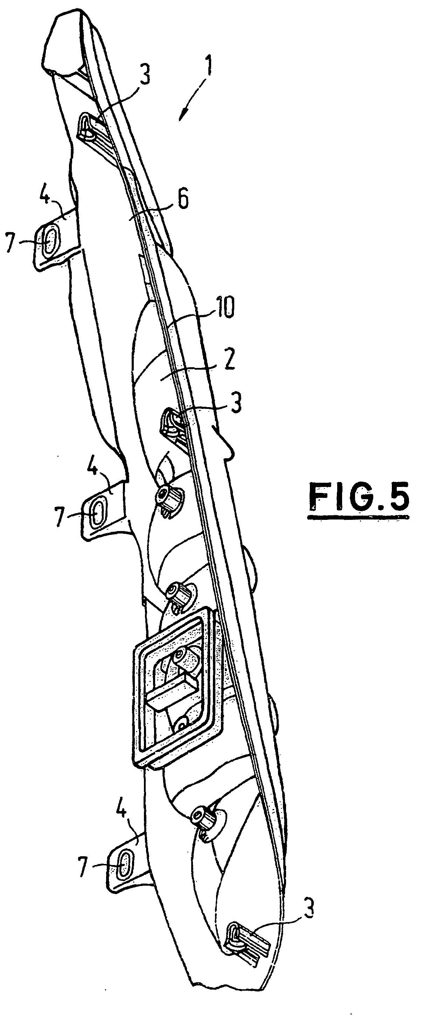

- Figur 2:: eine Draufsicht auf die Leuchte von Figur 1 in einem entlang der Linie II - II geschnittenen Horizontalschnitt,
- Figur 3:: einen Vertikalschnitt der Leuchte von Figur 1 entlang der Linie III - III geschnitten,

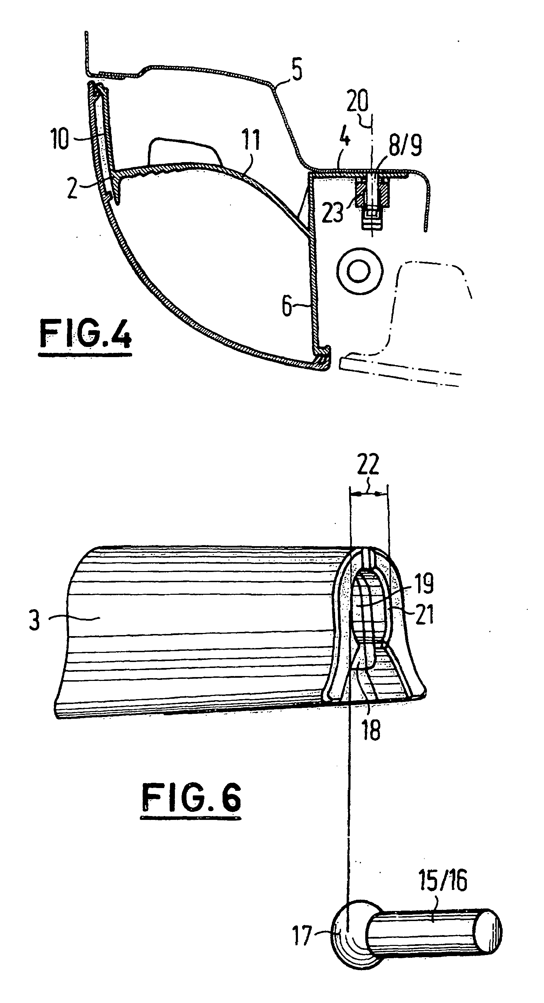

- Figur 4:: einen Horizontalschnitt der Leuchte von Figur 1 entlang der Linie IV-IV geschnitten,
- Figur 5:: eine Rückansicht der Leuchte von Figur 1 in räumlicher Darstellung,
- Figur 6:: eine räumliche vergrößerte Darstellung eines Aufsetzteiles und eines Kugelbolzens und

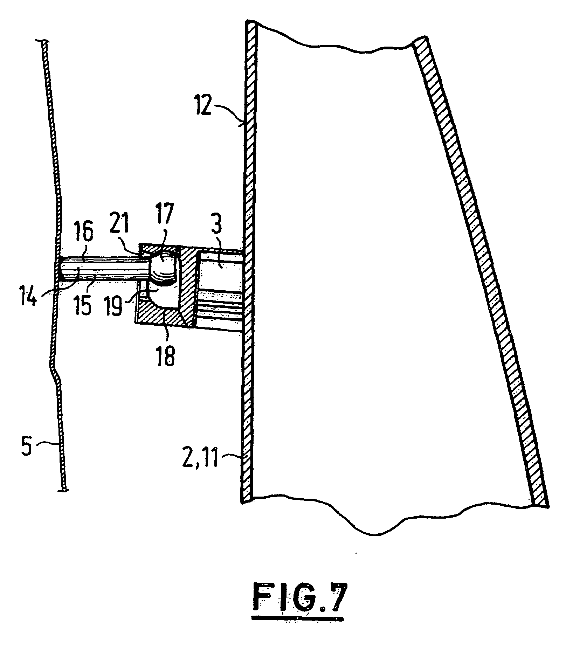

- Figur 7:: einen Vertikalschnitt durch ein Aufsetzteil in vergrößerter Darstellung.

Eine Leuchte 1 besteht im Wesentlichen aus einem Halterungsteil 2, einem Aufsetzteil 3 und einer Lasche 4.

Das Halterungsteil 2 ist als ein Gehäuseteil einer an einer Karosserie 5 eines Fahrzeuges anzuordnenden Heckleuchte 1 ausgebildet. Zur Befestigung weist das Halterungsteil 2 seitlich an einer Seitenwandung 6 zu einer nicht dargestellten Fahrzeugmitte hin drei Laschen 4 mit Langlöchern 7 auf. Die Laschen 4 sind mit ihren Langlöchern 7 über an der Karosserie 5 angeordnete Befestigungsteile 8 steckbar. Die Befestigungsteile 8 sind als Gewindebolzen 9 ausgebildet, die mit einem Ende an der Karosserie 5 befestigt sind und die an ihren freien Enden ein Gewinde aufweisen. Die freien Enden der Gewindebolzens 9 ragen jeweils im montierten Zustand durch die Laschen 4 hindurch.

Zu einer der Seitenwandung 6 ist eine Außenwandung 10 des Halterungsteiles 2 gegenüberliegend angeordnet. Auf einer von einer die Wandungen 6, 10 verbindenden Rückwandung 11 auf die Karosserie 5 zugewandten Innenseite 12 sind drei Aufsetzteile 3 angeordnet. Die Aufsetzteile 3 weisen jeweils eine Aufsetzteillängsachse 13 auf, die etwa in Richtung der Längsachsen 14 der mit ihnen korrespondieren Kugelbolzen 15 angeordnet sind.

Die Kugelbolzen 15 weisen einen an der Karosserie 5 mit einem Ende befestigten zylindrischen Bolzenkörper 16 auf, an dessem der Karosserie 5 abgewandten Ende ein Kugelkopf 17 angeordnet ist. Das Aufsetzteil 3 weist in Ausdehnungsrichtung des Langloches 7, die in vertikaler Richtung angeordnet ist, eine durch eine seitliche Öffnung 18 geöffnete Kugelschale 19 auf, in die der Kugelkopf 17 des Kugelbolzens 15 eingreifbar ist.

Die Längsachsen 20 der Befestigungsteile 8 und die Längsachsen 14 der Kugelbolzen 15 sind etwa parallel zueinander in horizontaler Richtung und in Richtung einer nicht dargestellten Fahrzeuglängs- bzw. Karosserielängsachse angeordnet. Die Aufsetzteillängsachse 13 ist etwa in Richtung der Längsachse 14 des Kugelbolzens 15 angeordnet. Das Aufsetzteil 3 weist an seinem dem Halterungsteil 2 abgewandten freien Ende eine stirnseitige Öffnung 21 auf, durch die im montierten Zustand der Kugelbolzen 15 mit seinem Bolzenkörper 16 hindurchgeführt ist. Die stirnseitige Öffnung 21 weist eine lichte Weite 22 auf, die größer ist als der Durchmesser des Bolzenkörpers 16 einerseits und die größer ist als der Durchmesser des Kugelkopfes 17 andererseits. In vertikaler Richtung ist die stirnseitige Öffnung 21 wesentlich länger ausgebildet als der Durchmesser des Kugelkopfes 17, so dass ein größerer Hinterschnitt gebildet ist. Alternativ können die Längsachsen auch in vertikaler Richtung oder in einem spitzen Winkel zu der Fahrzeuglängsachse angeordnet sein.

Die sich nach Verengung der stirnseitigen Öffnung 21 anschließende seitliche Öffnung 18 des Aufsetzteiles 3 erweitert sich in radialer Richtung, d. h. quer zur Aufsetzteillängsachse 13 nach außen hin.

Zur Montage wird das Halterungsteil 2 in einer oberen Montagestellung mit seinen Laschen 4 über die Befestigungsteile 8 gesteckt. Dabei befinden sich die Gewindebolzen 9 in einem in vertikaler Richtung unteren Bereich der Langlöcher 7 und ragen mit ihren freien Enden aus den Laschen 4 bzw. den Langlöchern 7 hervor. Durch Verschieben des Halterungsteiles 2 in eine untere Fixierstellung verschieben sich die Laschen 4 in vertikaler Richtung nach unten so, dass die Gewindebolzen sich in einem oberen Bereich der Langlöcher 7 befinden. Gleichzeitig werden durch die Verschiebung des Halterungsteiles 2 die Aufsetzteile 3 bzw. deren Kugelschalen 19 so über die Kugelköpfe 17 der Kugelbolzen 15 geschoben, dass die Kugelköpfe 17 unter Aufweitung der seitlichen Öffnung 18 die Kugelschalen 19 hintergreifen. Die Kugelköpfe 17 sind mit Spiel in der Kugelschale 19 gelagert. Zur Sicherung werden die Laschen 4 über Muttern 23, die auf die Gewindebolzen 9 aufgeschraubt werden, mit der Karosserie verschraubt. Eine Demontage ist ohne Probleme in umgekehrter Reihenfolge möglich. Alternativ kann die Verschiebung des Halterungsteils 2 auch in horizontaler Richtung oder schräg erfolgen, wobei die Öffnungen 18 der Kugelschalen 19 entsprechend ausgerichtet sind.

Alternativ kann die stirnseitige Öffnung 21 eine lichte Weite 22 aufweisen, die größer ist als der Durchmesser des Bolzenkörpers 16 einerseits und die kleiner ist als der Durchmesser des Kugelkopfes 17 andererseits. Hierdurch ergibt sich ein Rastverbindung zwischen dem Kugelkopf 17 und der Kugelschale 19, wobei das Aufsetzteil 3 als Rastteil ausgebildet ist..

Alternativ kann das Halterungsteil 2 zur Befestigung auch zwei Aufsetzteile oder lediglich ein einziges mit dem Kugelbolzen 15 verbindbares Aufsetzteil aufweisen, so dass weniger Teile notwendig sind.

Alternativ kann die Montagerichtung in horizontaler Richtung oder geneigt zu einer Vertikalebene verlaufen, wobei die Längsachsen vom Befestigungsteil 8 und von Kugelbolzen 15 etwa parallel verlaufen. Dabei ist der Kugelkopf 17 verschiebbar in der Kugelschale 19 gelagert, wobei ein selbsttätiges Lösen durch die Verengung der seitlichen Öffnung 21 in Querrichtung zur Aufsetzteillängsachse verhindert wird. Der Kugelkopf 17 hintergreift das Aufsetzteil 3.

## Patentansprüche

1. Leuchte, insbesondere Heckleuchte für Kraftfahrzeuge, mit einem an einer Karosserie zu befestigenden Halterungsteil, das mit mindestens einer Lasche auf ein an der Karosserie angeordnetes Befestigungsteil aufsteckbar ist und das mindestens ein Aufsetzteil aufweist, das mit der Karosserie verbindbar ist, **dadurch gekennzeichnet, dass** die Lasche (4) ein Langloch (7) aufweist und dass das Aufsetzteil (3) eine in Ausdehnungsrichtung des Langloches (7) durch eine seitliche Öffnung (18) geöffnete Kugelschale (19) aufweist, in der ein an der Karosserie (3) angeordneter Kugelkopf (17) eines Kugelbolzens (16) hintergreifbar oder verrastbar angeordnet ist.

2. Leuchte nach Anspruch 1, **dadurch gekennzeichnet, dass** das Langloch (7) der Lasche (4) in vertikaler Richtung angeordnet und die Kugelschale (19) in vertikaler Richtung nach unten geöffnet ist.

3. Leuchte nach Anspruch 1 oder 2, **dadurch gekennzeichnet, dass** die Längsachsen (20, 14) vom Befestigungsteil (8) und vom Kugelbolzen (15) etwa parallel zueinander in horizontaler Richtung angeordnet sind.

4. Leuchte nach Anspruch 3, **dadurch gekennzeichnet, dass** das Aufsetzteil (3) eine Aufsetzteillängsachse (13) aufweist, die etwa in Richtung der Längsachse (20) des Kugelbolzens (15) anordenbar ist.

5. Leuchte nach einem der Anspruche 1 bis 4, **dadurch gekennzeichnet, dass** das Aufsetzteil (3) an seinem dem Halterungsteil (2) abgewandten freien Ende eine stirnseitige Öffnung (21) aufweist, durch die im montierten Zustand der Kugelbolzen (15) mit seinem Bolzenkörper (16) hindurchgeführt ist.

6. Leuchte nach einem der Ansprüche 1 bis 5, **dadurch gekennzeichnet, dass** sich die Quererstreckung der seitlichen Öffnung (18) des Aufsetzteiles (3) in Richtung nach außen hin verringert.

7. Leuchte nach einem der Ansprüche 1 bis 6, **dadurch gekennzeichnet, dass** das Halterungsteil (2) drei Laschen (4) und die Karosserie (5) drei mit den Laschen (4) korrespondierende Befestigungsteile (8) aufweist.

8. Leuchte nach einem der Ansprüche 1 bis 7, **dadurch gekennzeichnet, dass** das Halterungsteil (2) drei Aufsetzteile (3) und die Karosserie (5) drei mit den Kugelschalen (19) der Aufsetzteile (3) korrespondierenden Kugelbolzen (15) aufweist.

9. Leuchte nach einem der Ansprüche 1 bis 8, **dadurch gekennzeichnet, dass** das Befestigungsteil (8) als ein Gewindebolzen (9) ausgebildet ist, auf dem die Lasche (4) mit ihrem Langloch (7) aufsteckbar und durch eine Mutter (23) fixierbar ist.

10. Leuchte nach einem der Ansprüche 1 bis 9, **dadurch gekennzeichnet, dass** in einer oberen Montagestellung des Halterungsteiles (2) die Gewindebolzen (9) in einem in vertikaler Richtung unteren Bereich der Langlöcher (7) der Laschen (4) angeordnet und die Aufsetzteile (3) mit den Kugelbolzen (15) nicht im Eingriff sind, und dass in einer unteren Fixierstellung der Halterung (2) die Gewindebolzen (9) in einem in vertikaler Richtung oberen Bereich der Langlöcher (7) angeordnet und die Aufsetzteile (3) mit den Kugelbolzen (15) verrastet sind.

## Claims

1. Light unit, especially a taillight for motor vehicles, having a holder element which is adapted to be attached to a vehicle body and to be pushed up on a fixing means disposed on said body with at least one fixing strap and which comprises at least one slip-on element adapted to be connected to the body, **characterized by** the fact that said strap (4) comprises a slot hole (7) and that said slip-on element (3) is provided with a ball cup (19) which is open in the expansion sense of the slot hole (7) via a lateral opening (18) and into and/or behind which a ball head (17) of a ball-head bolt (16) is engageable and/or lockable.

2. Light unit according to Claim 1, **characterized by** the fact that the slot hole (7) of said strap (4) is extending vertically and that said ball cup (19) is open in a vertically downward direction.

3. Light unit according to Claim 1 or 2, **characterized by** the fact that the longitudinal axes (20, 14) of the fixing means (8) and the ball-head bolt (12) are arranged substantially parallel in horizontal direction.

4. Light unit according to Claim 3, **characterized by** the fact that the slip-on element (3) has a longitudinal axis which may be disposed substantially in the direction of the longitudinal axis (20) of said ball-head bolt (15).

5. Light unit according to any of the preceding Claims 1 to 4, **characterized by** the fact that the slip-on element (3) is provided with a head-end opening (21) at its free end facing away from the holder element (2) through which opening the body (15) of the ball-head bolt (15) extends while in assembled condition.

6. Light unit according to any of the preceding Claims 1 to 5, **characterized by** the fact that the transverse extension of said lateral opening (18) of the slip-on element (3) reduces in outward direction.

7. Light unit according to any of the preceding Claims 1 to 6, **characterized by** the fact that said holder element (2) has three straps (4) and that the car body (5) is provided with three fixing means (8) matching said straps (4).

8. Light unit according to any of the preceding Claims 1 to 7, **characterized by** the fact that said holder element (2) comprises three slip-on elements (3) and that the car body (5) is provided with three ball-head bolts (15) matching the ball cups (19) of the slip-on elements (3).

9. Light unit according to any of the preceding Claims 1 to 9, **characterized by** the fact that the fixing means (8) is provided in the form of a threaded bolt (9) to which the strap (4) may be fitted via its slot hole (7) and secured by means of a nut (23).

10. Light unit according to any of the preceding Claims 1 to 9, **characterized by** the fact that with the holder element (2) in an upper mounting position said threaded bolts (9) are disposed in a vertically lower area (7) of the straps (4) and the slip-on elements (3) with their ball-head bolts (15) are out of engagement and that with the holder element (2) in a lower fixing position the threaded bolts (9) are disposed in a vertically upper area of the slot holes (7) and the slip-on elements (3) are in locking engagement with the ball-head bolts (15).

## Revendications

1. Feu, notamment bloc optique arrière pour véhicules automobiles, avec un support à fixer sur une carrosserie, lequel peut être enfiché, à l'aide d'au moins une bride, sur un élément de fixation disposé sur ladite carrosserie, et présente au moins une pièce de contact qui peut être reliée à la carrosserie, **caractérisé en ce que** la bride (4) présente un trou oblong (7) et que la pièce de contact (3) présente un logement sphérique (19) qui est pourvu d'un orifice latéral (18), ouvert dans le sens de la longueur du trou oblong (7), et dans lequel l'embout (17) d'une cheville à rotule (16), qui équipe la carrosserie, peut se loger ou s'enclencher.

2. Feu selon la revendication 1, **caractérisé en ce que** le trou oblong (7) de la bride (4) est orienté dans le sens vertical et que le logement sphérique (19) est ouvert vers le bas, dans le sens vertical.

3. Feu selon la revendication 1 ou 2, **caractérisé en ce que** les axes longitudinaux (20, 14) de l'élément de fixation (8) et de la cheville à rotule (15) sont disposés à peu près parallèlement l'un par rapport à l'autre, dans le sens horizontal.

4. Feu selon la revendication 3, **caractérisé en ce que** la pièce de contact (3) présente un axe longitudinal (13) qui peut être orienté approximativement dans la direction de l'axe longitudinal (20) de la cheville à rotule (15).

5. Feu selon l'une des revendication 1 à 4, **caractérisé en ce que** la pièce de contact (3) présente, à son extrémité libre, opposée au support (2), une ouverture frontale (21) par laquelle, à l'état monté, la cheville à rotule (15) s'engage avec son corps (16).

6. Feu selon l'une des revendications 1 à 5, **caractérisé en ce que** l'ouverture transversale de l'orifice latéral (18) de la pièce de contact (3) diminue vers l'extérieur.

7. Feu selon l'une des revendications 1 à 6, **caractérisé en ce que** le support (2) présente trois brides (4) et la carrosserie (5) trois éléments de fixation (8) qui correspondent aux brides (4).

8. Feu selon l'une des revendications 1 à 7, **caractérisé en ce que** le support (2) présente trois pièces de contact (3) et la carrosserie trois chevilles à rotule (15) correspondant aux logements sphériques (19) des pièces de contact (3).

9. Feu selon l'une des revendications 1 à 8, **caractérisé en ce que** l'élément de fixation (8) est conçu sous la forme d'un boulon fileté (9) sur lequel la bride (4) peut être enfilée par son trou oblong (7) et fixée à l'aide d'un écrou (23).

10. Feu selon l'une des revendications 1 à 9, **caractérisé en ce que**, dans une première position de montage du support (2), les boulons filetés (9) sont disposés dans un secteur inférieur des trous oblongs (7) des brides (4), vus dans le sens vertical, et les pièces de contact (3) ne sont pas en prise avec les chevilles à rotule (15), et que, dans une position de fixation inférieure du support (2), les boulons filetés (9) sont disposés dans un secteur supérieur des trous oblongs, vus dans le sens vertical, et les pièces de contact (3) sont en prise avec les chevilles à rotule (15).
